# FASCICULE DE BREVET EUROPEEN

(11) **EP 3 548 526 B1**
(45) Date de publication et mention de la délivrance du brevet: **18.01.2023**
(21) Numéro de dépôt: 17811664.6
(22) Date de dépôt: 28.11.2017
(51) Int. Cl.: C08F 210/16, C08F 4/54

(54) **SYSTÈME CATALYTIQUE PRÉFORME COMPRENANT UN MÉTALLOCÈNE DE TERRE RARE**
VORGEFORMTES KATALYTISCHES SYSTEM MIT EINEM SELTENERDMETALLOCEN
PREFORMED CATALYTIC SYSTEM COMPRISING A RARE EARTH METAL METALLOCENE

(30) Priorité: 30.11.2016 FR 1661680
(43) Date de publication de la demande: 09.10.2019
(73) Titulaire: Compagnie Générale des Etablissements Michelin, 63000 Clermont-Ferrand (FR)
(72) Inventeur: LAFAQUIERE, Vincent, 63040 Clermont-Ferrand Cedex 9 (FR); THUILLIEZ, Julien, 63040 Clermont-Ferrand Cedex 9 (FR)
(74) Mandataire: Gandon-Pain, Sylvie
(86) Numéro de dépôt international: PCT/FR2017/053266
(87) Numéro de publication internationale: WO 2018/100279

(56) Documents cités:
- EP-A1- 1 092 731
- WO-A1-99/16797
- WO-A2-2007/054223
- WO-A2-2007/054224
- US-A- 3 794 604

## Description

La présente invention concerne un système catalytique préformé à base de métallocènes de terre rare, notamment utilisable dans la polymérisation des monomères tels que les diènes conjugués, l'éthylène, les α-monooléfines et leurs mélanges. L'invention porte également sur un procédé de préparation dudit système catalytique, ainsi que son utilisation dans la synthèse de polymères.

Les systèmes catalytiques à base de métallocènes de terre rare sont connus : ils sont par exemple décrits dans les demandes de brevet EP 1 092 731 et WO 2007054223 au nom des Demanderesses pour être utilisés dans la polymérisation de monomères tels que les diènes conjugués, l'éthylène et les α-monooléfines. Ils sont le produit de réaction d'un métallocène de lanthanide et d'un co-catalyseur dans un solvant hydrocarboné. Ces systèmes catalytiques, ainsi formés, ont l'inconvénient de voir leur activité catalytique diminuer au stockage. Pour garantir les spécifications du polymère à synthétiser, il est alors nécessaire dans le procédé de polymérisation de compenser les fluctuations de l'activité catalytique du système catalytique qui résultent de son stockage. Cette compensation passe par le réajustement des paramètres du procédé de polymérisation tels que les quantités respectives des monomères et du système catalytique. Il s'en suit qu'une phase de réglage des paramètres du procédé de polymérisation et une phase de mise en stabilité de l'outil de polymérisation sont requises avant que l'outil ne soit en mesure de produire le polymère en spécification. Ces phases de réglage et de mise en stabilité ont pour effet de diminuer la productivité de l'outil de production et de complexifier la conduite de l'outil de polymérisation.

Pourtant, certains de ces systèmes catalytiques sont d'intérêt dans la mesure où ils permettent d'accéder à des copolymères de microstructure spécifique. Il est donc d'intérêt de trouver une solution pour améliorer la stabilité dans le temps de l'activité catalytique de ces systèmes catalytiques, notamment la stabilité au stockage.

Les Demanderesses, poursuivant leurs efforts, ont découvert un système catalytique à base d'un métallocène de terre rare présentant une stabilité de l'activité catalytique améliorée au stockage, ce qui permet de résoudre les problèmes rencontrés mentionnés précédemment. Le système catalytique selon l'invention a la particularité d'être un système catalytique de type « préformé ».

Ainsi, un premier objet de l'invention est un système catalytique à base au moins :
- d'un monomère de préformation choisi dans le groupe constitué par les 1,3-diènes, l'éthylène, les α-monooléfines et leurs mélanges
- d'un métallocène de formule (I)
- d'un composé organométallique à titre de co-catalyseur,

   {P(Cp)(Flu)LnG} (I)
- Ln désignant un atome de métal qui est une terre rare,
- G désignant un groupe comprenant le motif borohydrure BH₄ ou désignant un atome d'halogène choisi dans le groupe constitué par le chlore, le fluor, le brome et l'iode,
- Cp désignant un groupe cyclopentadiényle de formule C₅H₄,
- Flu désignant un groupe fluorényle de formule C₁₃H₈,
- P étant un groupe pontant les deux groupes Cp et Flu, et comprenant un atome de silicium ou de carbone

L'invention concerne aussi un procédé pour préparer le système catalytique conforme à l'invention.

L'invention porte également sur un procédé de préparation d'un polymère qui comprend la polymérisation d'un monomère en présence du système catalytique conforme à l'invention.

### I. DESCRIPTION DETAILLEE DE L'INVENTION

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Par l'expression « à base de » utilisée pour définir les constituants du système catalytique, on entend le mélange de ces constituants, ou le produit de la réaction d'une partie ou de la totalité de ces constituants entre eux.

Le système catalytique conforme à l'invention a pour caractéristique essentielle d'être un système catalytique préformé à partir d'un monomère choisi dans le groupe constitué par les 1,3-diènes, l'éthylène, les α-monooléfines et leurs mélanges. Le 1,3-diène utilisé à titre de monomère de préformation peut être un 1,3-diène ou un mélange de 1,3-diènes ayant de 4 à 8 atomes de carbone, de préférence le 1,3-butadiène ou l'isoprène. L'α-monooléfine utilisée à titre de monomère de préformation peut être aliphatique tel qu'un 1-alcène ou bien aromatique, tel que le styrène ou un styrène dont un atome de carbone du noyau benzénique autre que le carbone portant le groupe vinyle est substitué par un alkyle. De manière particulièrement préférentielle, le monomère de préformation est le 1,3-butadiène, l'isoprène, l'éthylène, le styrène ou leurs mélanges, tel qu'un mélange de styrène et d'un monomère choisi parmi le 1,3-butadiène, l'isoprène et l'éthylène.

Le monomère diène conjugué de préformation est utilisé de préférence selon un rapport molaire (monomère diène conjugué de préformation / métal du métallocène) allant de 5 à 1000, préférentiellement de 10 à 500.

Le métallocène utilisé comme constituant de base dans le système catalytique conforme à l'invention répond à la formule (I)

{P(Cp)(Flu)LnG} (I)

dans laquelle
- Ln désignant un atome de métal qui est une terre rare,
- G désignant un groupe comprenant le motif borohydrure BH₄ ou désignant un atome d'halogène X choisi dans le groupe constitué par le chlore, le fluor, le brome et l'iode,
- Cp désignant un groupe cyclopentadiényle de formule C₅H₄,
- Flu désignant un groupe fluorényle de formule C₁₃H₈,
- P étant un groupe pontant les deux groupes Cp et Flu, et comprenant un atome de silicium ou de carbone.

Dans la formule (I), l'atome de terre rare est relié à une molécule de ligand constitué des deux groupes Cp et Flu reliés entre eux par le pont P. On rappelle que les terres rares sont des métaux et désignent les éléments scandium, yttrium et les lanthanides dont le numéro atomique varie de 57 à 71.

Selon un mode de réalisation préférentiel de l'invention, le symbole G désigne un atome de chlore ou le groupe de formule (II) :

(BH₄)_{(1+y)-}L_{y}-Nₓ (II)

dans laquelle
- L représente un métal alcalin choisi dans le groupe constitué par le lithium, le sodium et le potassium,
- N représente une molécule d'un éther,
- x, nombre entier ou non, est égal ou supérieur à 0,
- y, nombre entier, est égal ou supérieur à 0.

Comme éther convient tout éther qui a le pouvoir de complexer le métal alcalin, notamment le diéthyléther et le tétrahydrofuranne.

Selon l'un quelconque des modes de réalisation de l'invention, le métal du métallocène utile au besoin de l'invention, en l'espèce la terre rare, est de préférence un lanthanide dont le numéro atomique va de 57 à 71, de manière plus préférentielle le néodyme, Nd.

Le pont P reliant les groupes Cp et Flu répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z désigne avantageusement un atome de silicium, Si.

Selon un mode de réalisation particulièrement préférentiel, le métallocène est le borohydrure de diméthylsilyl cyclopentadiényle fluorényle de néodyme de formules (IIIa) ou (IIIb):

[Me₂Si(Cp)(Flu)Nd(µ-BH₄)₂Li(THF)] (IIIa)

[Me₂Si(Cp)(Flu)Nd(µ-BH₄)(THF)] (IIIb)

dans laquelle Cp représente le groupe C₅H₄, Flu représente le groupe C₁₃H₈.

Un autre constituant de base du système catalytique conforme à l'invention est le co-catalyseur capable d'activer le métallocène vis-à-vis de la polymérisation, notamment dans la réaction d'amorçage de polymérisation. Le co-catalyseur est de manière bien connu un composé organométallique. Peuvent convenir les composés organométalliques capables d'activer le métallocène, tels que les composés organomagnésiens, organoaluminiques et organolithiens.

Le co-catalyseur est préférentiellement un organomagnésien, c'est-à-dire un composé qui présente au moins une liaison C-Mg. A titre de composés organomagnésiens on peut citer les diorganomagnésiens, en particulier les dialkylmagnésiens et les halogénures d'organomagnésien, en particulier les halogénures d'alkylmagnésien. Le composé diorganomagnésien présente deux liaisons C-Mg, en l'espèce C-Mg-C ; l'halogénure d'organomagnésien présente une liaison C-Mg. De manière plus préférentielle, le co-catalyseur est un diorganomagnésien.

Selon un mode de réalisation particulièrement préférentiel de l'invention, le co-catalyseur est un composé organométallique comportant un groupe alkyle lié à l'atome de métal. A titre de co-catalyseur, également appelé agent d'alkylation, conviennent particulièrement les alkylmagnésiens (également appelés alkylmagnésium), tout particulièrement les dialkylmagnésiens (également appelés dialkylmagnésium) ou les halogénures d'alkylmagnésien (également appelés halogénures d'alkylmagnésium), comme par exemple le butyloctylmagnésium, le dibutylmagnésium, le butyléthylmagnésium et le chlorure de butylmagnésium. Le co-catalyseur est avantageusement le butyloctylmagnésium.

Le co-catalyseur est utilisé selon un rapport molaire (co-catalyseur / métal du métallocène) allant de préférence de 0,5 à 20, de manière plus préférentielle de 1 à 10.

Selon l'un quelconque des modes de réalisation de l'invention, le système catalytique comprend de préférence un solvant hydrocarboné. Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné.

Lorsque le système catalytique est en solution, sa concentration est définie par la teneur en métal de métallocène dans la solution. La concentration en métal de métallocène a une valeur allant préférentiellement de 0,0001 à 0,05 mol/l, plus préférentiellement de 0,001 à 0,02 mol/l.

Un autre objet de l'invention est la préparation du système catalytique décrit ci-dessus.

Le procédé de préparation du système catalytique conforme à l'invention comprend les étapes a) et b) suivantes :
- a) faire réagir dans un solvant hydrocarboné le co-catalyseur et le métallocène,
- b) faire réagir le monomère de préformation au produit de réaction de l'étape a).

Le métallocène utilisé pour la préparation du système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande WO 2007054224 A2. Le métallocène peut être préparé de façon traditionnelle par un procédé analogue à celui décrit dans les documents EP 1 092731 et WO 2007054223, notamment par réaction dans des conditions inertes et anhydres du sel d'un métal alcalin du ligand avec un sel de terre rare comme un halogénure ou un borohydrure de terre rare, dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

L'étape a) correspond à l'étape d'activation, communément aussi appelée alkylation, du métallocène par le co-catalyseur; l'étape b) correspond à l'étape de préformation du système catalytique.

Le solvant hydrocarboné utilisé dans la préparation du système catalytique est généralement un solvant hydrocarboné aliphatique ou aromatique, comme par exemple le méthylcyclohexane ou le toluène. Le plus souvent, il est identique au solvant de la solution catalytique définie précédemment. En effet, le solvant hydrocarboné utilisé dans la préparation du système catalytique est, de préférence, aussi le solvant de la solution catalytique.

Dans l'étape a), au solvant hydrocarboné est ajouté généralement le co-catalyseur, puis le métallocène. L'étape a) a généralement lieu à une température allant de 20 à 80°C. Le temps de réaction de l'étape a) est compris de préférence entre 5 et 60 minutes, plus préférentiellement varie de 10 à 20 minutes.

L'étape b) est réalisée généralement à une température allant de 40 à 120°C, préférentiellement de 40 à 90°C. Le temps de réaction de l'étape b) varie typiquement de 0,5 heure à 24 heures, préférentiellement de 1h à 12 h. Dans l'étape b), on ajoute le monomère de préformation au produit de réaction de l'étape a).

L'étape b) peut être suivie d'une étape c) de dégazage pour éliminer le monomère de préformation qui n'aurait pas réagi au cours de l'étape b).

Comme toute synthèse faite en présence de composé organométallique, la synthèse a lieu dans des conditions anhydres sous atmosphère inerte aussi bien pour l'étape a) que pour l'étape b) et le cas échéant l'étape c). Typiquement, les réactions sont conduites à partir de solvants et de monomères anhydres sous azote ou argon anhydre. Les étapes a), b) et c) sont conduites généralement sous agitation.

Avant d'être utilisé par exemple en polymérisation, le système catalytique ainsi obtenu en solution peut être stocké sous atmosphère inerte, par exemple sous azote ou argon, notamment à une température allant de -20°C à la température ambiante (23°C).

Un autre objet de l'invention est un procédé de préparation d'un polymère qui comprend la polymérisation d'un monomère M en présence du système catalytique conforme à l'invention. Le monomère M est à distinguer du monomère de préformation utilisé dans la préparation du système catalytique dans l'étape b) : le monomère M peut être ou ne pas être de même nature chimique que le monomère utilisé dans l'étape b). Le monomère M est de préférence choisi dans le groupe des monomères constitués par les diènes conjugués, l'éthylène, les α-monooléfines et leurs mélanges. Le diène conjugué utilisé comme monomère M est de préférence un 1,3-diène ayant de 4 à 8 atomes de carbone, de manière plus préférentielle le 1,3-butadiène ou l'isoprène. L'α-monooléfine utilisée à titre de monomère M peut être aliphatique tel qu'un 1-alcène ou bien aromatique, tel que le styrène ou un styrène dont un atome de carbone du noyau benzénique autre que le carbone portant le groupe vinyle est substitué par un alkyle. De manière particulièrement préférentielle, le monomère M est le 1,3-butadiène, l'isoprène, l'éthylène, le styrène ou leurs mélanges, en particulier un mélange de 1,3-butadiène et d'éthylène. Les polymères obtenus selon le procédé conforme à l'invention ont une microstructure semblable à celle des polymères déjà connus de l'état de la technique et notamment obtenu par le procédé décrit dans la demande de brevet WO 2007054223 et mettant en œuvre un système catalytique non préformé. Selon la microstructure et la longueur des chaînes polymères préparées par le procédé conforme à l'invention, le polymère peut être un élastomère.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Le monomère M peut être introduit dans le réacteur contenant le solvant de polymérisation et le système catalytique ou inversement le système catalytique peut être introduit dans le réacteur contenant le solvant de polymérisation et le monomère. Le monomère et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement de 40 à 120°C.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Caractérisation des polymères par chromatographie d'exclusion stérique (SEC) :

Les analyses de SEC ont été réalisées à haute température (HT-SEC) en utilisant un appareil Viscotek (de Malvern Instruments) équipé avec 3 colonnes (PLgel Olexis 300 mm x 7 mm I**.** D. de Agilent Technologies) et de 3 détecteurs (réfractomètre, viscosimètre et diffusion de la lumière). 200 µL d'une solution de l'échantillon à une concentration de 5 mg mL⁻¹ ont été élués dans le 1,2,4-trichlorobenzene en utilisant un débit de 1 mL min⁻¹ à 150°C. La phase mobile a été stabilisée par du 2,6-di(tert-butyl)-4-methylphénol (200 mg L⁻¹). Le logiciel OmniSEC a été utilisé pour l'acquisition et l'analyse des données. Les masses molaires moyennes en nombre Mn et l'indice de polydispersité D ont été calculées par calibration universelle en utilisant des standards de polystyrène.

### 11.2-Spectroscopie de résonance magnétique nucléaire (RMN) :

La microstructure des polymères a été déterminée par analyse RMN ¹³ C. Les spectres sont acquis sur un spectromètre 500 MHz BRUKER équipé d'une cryosonde Hélium « large bande » BBFOz-grad 5 mm. L'expérience 1D RMN ¹³C quantitative, utilise une séquence simple impulsion 30° avec un découplage des protons et un délai de répétition de 6 secondes entre chaque acquisition. Les échantillons sont solubilisés dans le chloroforme deuteré. Le spectre RMN ¹³C est calibré avec le carbone du CDCl₃ à 77 ppm. La méthode décrite dans Macromolecules 2001, 34, 6304-6311 a été utilisée, en adaptant les conditions opératoires de mise en solution des polymères décrits dans les exemples, et les déplacements chimiques de chaque motif ont été vérifiés par des mesures RMN 2D de corrélations 1H/13C.

### II.3-Préparation de systèmes catalytiques conformes à l'invention : exemples 1 à 14

Les systèmes catalytiques C1-C14 conformes à l'invention sont préparés selon le mode opératoire suivant.

Dans un réacteur contenant le solvant hydrocarboné méthylcyclohexane (MCH) ou toluène (Tol), on ajoute le co-catalyseur, le butyloctylmagnésium (BOMAG) puis le métallocène [Me₂Si(Cp)(Flu)Nd(µ-BH₄)₂i(THF)] dans les teneurs indiquées dans le tableau I. La durée d'activation est de 10 minutes, la température de réaction est de 20 °C. (étape a). Ensuite, le monomère de préformation est introduit dans le réacteur dans les proportions indiquées dans le tableau I. La réaction de préformation se déroule à une température indiquée dans le tableau I, pendant une durée également indiquée dans le tableau I**.** Les monomères de préformation sont le 1,3-butadiène (But), l'isoprène (Iso), l'éthylène (Eth) ou le styrène (Sty) comme indiqué dans le tableau I**.** Le métallocène peut être préparé selon le mode opératoire décrit dans la demande de brevet WO 2007054223.

### 11.4-Préparation de systèmes catalytiques non conformes à l'invention : exemples 15 à 17,

Le système catalytique CE1-1 non conforme à l'invention est préparé selon le procédé divulgué dans la demande de brevet WO 2007054223 et décrit ci-après :
Dans un réacteur contenant du toluène (Tol), on ajoute le co-catalyseur, le butyloctylmagnésium (BOMAG) puis le métallocène [Me₂Si(Cp)(Flu)Nd(µ-BH₄)(THF)] dans les teneurs indiquées dans le tableau II. La durée d'activation est de 10 minutes, la température de réaction est de 20 °C. Ses conditions de préparation figurent dans le tableau II.

Le système catalytique CE1-2 non conforme à l'invention est préparé de façon similaire au système catalytique CE1-1 à l'exception du solvant qui est du méthylcyclohexane.

Le système catalytique CE1-3 non conforme à l'invention est préparé selon le mode opératoire suivant :
Dans un réacteur contenant le solvant hydrocarboné méthylcyclohexane (MCH), on ajoute le co-catalyseur, le butyloctylmagnésium (BOMAG) puis le métallocène [Me₂Si(Cp)(Flu)Nd(µ-BH₄)(THF)] dans les teneurs indiquées dans le tableau II. La durée d'activation est de 1h, la température de réaction est de 60 °C.

Les systèmes catalytiques CE1-1, CE1-2 et CE1-3 ne sont pas conformes à l'invention en raison de l'absence de l'étape de préformation (étape b). Ce sont des systèmes catalytiques connus de l'état de la technique, notamment de la demande de brevet WO 2007054223. Les systèmes catalytiques CE1-1 et CE1-2 sont formés « *in situ* » : autrement dit la réaction d'activation a lieu directement dans le solvant qui va tenir lieu de solvant de polymérisation, les monomères à polymériser sont alors ajoutés au solvant de polymérisation contenant le système catalytique formé in-situ. Pour CE1-3, les constituants du système catalytique CE1-3 sont *prémélangés* en présence d'un solvant dans lequel a lieu la réaction d'activation pour former une solution catalytique à 0.005 mol/L en métallocène, c'est cette solution catalytique qui est ajoutée au solvant de polymérisation. Cette solution catalytique ne contient pas de monomères de préformation.

### II.5-Conditions de stockage des systèmes catalytiques :

Sauf indication contraire, les systèmes catalytiques C1 à C14 conformes à l'invention sont stockés immédiatement après leur préparation dans des bouteilles fermées hermétiquement sous atmosphère d'azote à -20°C.

Pour l'étude de la stabilité de l'activité catalytique au stockage d'un système catalytique conforme à l'invention, des bouteilles fermées hermétiquement sous azote contenant les systèmes catalytiques C3, C6, C9, C10, C11 et C14 sont aussi stockés à 23°C.

Les systèmes catalytiques CE1-1 et CE1-2 non conformes à l'invention ne sont pas stockés et sont utilisés de suite dans la synthèse de polymère pour déterminer leur activité catalytique.

Le système catalytique CE1-3 non conforme à l'invention, s'il n'est pas utilisé de suite dans la synthèse de polymère, est stocké immédiatement après sa préparation dans des bouteilles fermées hermétiquement sous atmosphère d'azote à 23°C.

### II.6-Stabilité de l'activité catalytique des systèmes catalytiques: exemples 18 à 31

Les systèmes catalytiques sont utilisés en polymérisation sans avoir été stockés après leur synthèse ou après avoir été stockés à température ambiante (23°C) pendant des durées variables. Les activités catalytiques des systèmes catalytiques sont déterminées, selon qu'ils ont été stockés ou pas, dans les conditions de polymérisation décrites ci-après.

La polymérisation est conduite à 80°C et à une pression initiale de 4 bars dans un réacteur en verre de 500 ml contenant 300 ml de solvant de polymérisation, le méthylcyclohexane, le système catalytique (67 µmol de métal Néodyme) et les monomères, les monomères 1,3-butadiène et l'éthylène étant introduits sous la forme d'un mélange gazeux contenant 20% molaire de 1,3-butadiène. Tous les essais ont été réalisés avec une teneur totale en BOMAG de 5 équivalents molaires par rapport au Néodyme, ce qui a conduit pour certains essais à un ajout supplémentaire de BOMAG dans le réacteur en même temps que le système catalytique. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide. La masse pesée permet de déterminer l'activité catalytique moyenne du système catalytique exprimée en kilogramme de copolymère synthétisé par mole de métal néodyme et par heure (kg/mol.h).

Les résultats d'activité catalytique selon le temps et la température de stockage du système catalytique en solution figurent dans le tableau III.

Il est observé que l'activité catalytique des systèmes catalytiques conformes à l'invention est la même avant ou après stockage. Même un stockage de plus de 2 mois à 23°C n'a pas pour effet de diminuer l'activité catalytique.

En revanche, on observe que le système catalytique CE1-3 non conforme à l'invention ne présente pas une activité catalytique aussi stable au stockage à 23°C que les systèmes catalytiques conformes à l'invention. En effet, le système catalytique CE1-3 présente une déchéance en activité catalytique de plus de 30% après 1 mois de stockage à 23°C.

La stabilité de l'activité catalytique est aussi acquise pour les différents monomères de préformation.

Le maintien de l'activité catalytique sur une longue période permet d'utiliser un seul et même lot de fabrication d'un système catalytique conforme à l'invention sur cette même période sans avoir à procéder à des phases de réajustement des paramètres de procédé de polymérisation et de remise en stabilité de l'outil de polymérisation au cours de cette période, tout en garantissant les spécifications du polymère à synthétiser.

II.7-Comparaison de l'activité catalytique des systèmes catalytiques conformes à l'invention à celle des systèmes catalytiques de l'état de la technique : exemples P1 à P12, 18, 20, 22, 24, 26, 28 et 30.

Les systèmes catalytiques conformes à l'invention et les systèmes catalytiques non conformes à l'invention sont utilisés chacun dans la polymérisation d'un mélange d'éthylène et de 1,3-butadiène selon le mode opératoire décrit-ci après.

La polymérisation est conduite à 80°C et à une pression initiale de 4 bars dans un réacteur en verre de 500 ml contenant 300 ml de solvant de polymérisation, le méthylcyclohexane ou le toluène selon les exemples, le système catalytique (67 µmol de métal Néodyme) et les monomères, les monomères 1,3-butadiène et l'éthylène étant introduits sous la forme d'un mélange gazeux contenant 20% molaire de 1,3-butadiène. Tous les essais ont été réalisés avec une teneur totale en BOMAG de 5 équivalents molaires par rapport au Néodyme, ce qui a conduit pour certains essais à un ajout supplémentaire de BOMAG dans le réacteur en même temps que le système catalytique. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide. La masse pesée permet de déterminer l'activité catalytique moyenne du système catalytique exprimée en kilogramme de copolymère synthétisé par mole de métal néodyme et par heure (kg/mol.h).

Les activités catalytiques moyennes calculées pour chacun des systèmes catalytiques figurent dans les tableaux III et IV. Les exemples P1 à P10, 20, 22, 24, 26, 28 et 30 sont conformes à l'invention, car ils mettent en œuvre un système catalytique conforme à l'invention (C1 à C14) ; les exemples P11, P12 et 18 ne sont pas conformes à l'invention, car ils mettent en œuvre un système catalytique de l'état de la technique (CE1-1, CE1-2 et CE1-3).

On constate que la préformation n'a pas d'impact sur l'activité catalytique initiale des systèmes catalytiques, puisque les systèmes catalytiques conformes à l'invention ont une activité catalytique du même ordre de grandeur que les systèmes catalytiques non conformes CE1-1, CE1-2 et CE1-3, les systèmes catalytiques CE1-1 et CE1-2 étant utilisés immédiatement après leur préparation (système *type in situ*) et le système catalytique CE1-3 étant utilisé 12 heures ou 1 mois après sa préparation (système type *prémélangé*)*.*

En effet, le système catalytique C2, conforme à l'invention présente une activité catalytique de 77 kg/mol.h lorsqu'il est utilisé en polymérisation dans du toluène tandis que le système catalytique de l'état de la technique utilisé également en polymérisation dans le toluène présente une activité de 74 kg/mol.h. Il en est de même pour le système catalytique C2 utilisé en polymérisation dans le méthylcyclohexane qui présente une activité catalytique de 34 kg/mol.h tandis que le système catalytique de l'état de la technique présente une activité de 29 kg/mol.h dans les mêmes conditions. On peut cependant constater que la nature du solvant de polymérisation à une forte influence sur l'activité catalytique mesurée avec un même système catalytique. L'activité observée est plus importante lorsque le solvant de polymérisation est du toluène.

On note cependant que les préformations avec l'isoprène ou le styrène conduisent aux activités catalytiques les plus élevées lorsque la polymérisation est réalisée dans le méthylcyclohexane.

Il est également observé que la préformation n'a pas d'impact sur le taux molaire de motifs «éthylène » ou de motifs « butadiène » par rapport aux systèmes catalytiques formés *in situ* ou *prémélangés* (Tableau V).

**Tableau I**

| Exemple | Métallocène (mol/L) | Co-catalyseur (mol/L) | Solvant hydrocarboné | Monomère de préformation | Durée de préformation (h) | Température de préformation (°C) | Ratio molaire monomère/métal Nd | Système catalytique |
|---|---|---|---|---|---|---|---|---|
| 1 | 0.005 | 0.011 | MCH | But | 1 | 80 | 90 | C1 |
| 2 | 0.005 | 0.011 | Tol | But | 1 | 80 | 90 | C2 |
| 3 | 0.005 | 0.011 | MCH | But | 5 | 40 | 90 | C3 |
| 4 | 0.005 | 0.011 | MCH | But | 5 | 80 | 120 | C4 |
| 5 | 0,02 | 0.044 | MCH | But | 5 | 80 | 150 | C5 |
| 6 | 0.005 | 0.011 | MCH | But | 15 | 40 | 200 | C6 |
| 7 | 0.005 | 0.005 | MCH | But | 1 | 80 | 60 | C7 |
| 8 | 0.005 | 0.025 | MCH | But | 1 | 80 | 120 | C8 |
| 9 | 0.005 | 0.011 | MCH | Iso | 5 | 80 | 90 | C9 |
| 10 | 0.005 | 0.011 | MCH | Sty | 5 | 80 | 30 | C10 |
| 11 | 0.005 | 0.011 | MCH | Sty-But* | 1 | 80 | 150 | C11 |
| 12 | 0.005 | 0.011 | MCH | Eth | 1 | 80 | 60 | C12 |
| 13 | 0.005 | 0.011 | MCH | Eth-But** | 1 | 80 | 90 | C13 |
| 14 | 0.02 | 0.044 | MCH | Eth-But** | 5 | 80 | 90 | C14 |

| | | | | | | | | |
|---|---|---|---|---|---|---|---|---|
| * : Ratio molaire styrène-butadiène : 30/70 ** : Ratio molaire éthylène-butadiène : 80/20 | | | | | | | | |

**Tableau II**

| Exemple | Métallocène (mol/L) | Co-catalyseur (mol/L) | Solvant hydrocarboné | Durée d'activation (min) | Température d'activation (°C) | Système catalytique |
|---|---|---|---|---|---|---|
| 15 | 0,0001 | 0,0008 | Tol | 10 | 20 | CE1-1 |
| 16 | 0,0001 | 0,0008 | MCH | 10 | 20 | CE1-2 |
| 17 | 0,005 | 0,011 | MCH | 60 | 60 | CE1-3 |

**Tableau III**

| Exemple | Système catalytique | Durée de stockage (jour) | Température de stockage | Solvant de polymérisation | Activité kg/mol.h |
|---|---|---|---|---|---|
| 18 | CE1-3 | 0 | - | MCH | 33 |
| 19 | CE1-3 | 31 | 23°C | MCH | 22 |
| 20 | C3 | 0 | - | MCH | 29 |
| 21 | C3 | 65 | 23°C | MCH | 34 |
| 22 | C6 | 0 | - | MCH | 27 |
| 23 | C6 | 77 | 23°C | MCH | 26 |
| 24 | C9 | 0 | - | MCH | 36 |
| 25 | C9 | 75 | 23°C | MCH | 45 |
| 26 | C10 | 0 | - | MCH | 35 |
| 27 | C10 | 67 | 23°C | MCH | 42 |
| 28 | C11 | 0 | - | MCH | 30 |
| 29 | C11 | 40 | 23°C | MCH | 29 |
| 30 | C14 | 0 | - | MCH | 26 |
| 31 | C14 | 22 | 23°C | MCH | 25 |

**Tableau IV**

| Exemple | Système catalytique | Solvant de polymérisation | Activité kg/mol.h |
|---|---|---|---|
| P1 | C1 | MCH | 31 |
| P2 | C2 | toluène | 77 |
| P3 | C2 | MCH | 34 |
| P4 | C4 | MCH | 27 |
| P5 | C5 | MCH | 23 |
| P6 | C7 | MCH | 27 |
| P7 | C8 | MCH | 34 |
| P9 | C12 | MCH | 31 |
| P10 | C13 | MCH | 33 |
| P11 | CE1-1 | toluène | 74 |
| P12 | CE1-2 | MCH | 29 |

**Tableau V**

| Exemple | Mn g/mol | Dispersité | Motifs éthylène (% mol) | Motifs butadiène (% mol) |
|---|---|---|---|---|
| 18 | | | 76 | 24 |
| 20 | 4600 | 2.1 | 75 | 25 |
| 22 | 5700 | 2 | 70 | 30 |
| 24 | | | 77 | 23 |
| 26 | | | 76 | 24 |
| P1 | 3400 | 2.3 | 76 | 24 |
| P4 | - | | 76.4 | 23.6 |
| P5 | - | | 72.6 | 27.4 |
| P11 | 1500 | 2.2 | 77.6 | 22.4 |
| P12 | 2700 | 1.8 | 77 | 23 |

## Revendications

1. Système catalytique à base au moins :
• d'un monomère de préformation choisi dans le groupe constitué par les 1,3-diènes, l'éthylène, les α-monooléfines et leurs mélanges,
• d'un métallocène de formule (I)
• d'un composé organométallique à titre de co-catalyseur,
{P(Cp)(Flu)LnG} (I)
- Ln désignant un atome de métal qui est une terre rare,
- G désignant un groupe comprenant le motif borohydrure BH₄ ou désignant un atome d'halogène X choisi dans le groupe constitué par le chlore, le fluor, le brome et l'iode,
- Cp désignant un groupe cyclopentadiényle de formule C₅H₄,
- Flu désignant un groupe fluorényle de formule C₁₃H₈,
- P étant un groupe pontant les deux groupes Cp et Flu, et comprenant un atome de silicium ou de carbone
le système catalytique étant préparé par un procédé qui comprend les étapes a) et b) suivantes :
- a) faire réagir dans un solvant hydrocarboné le co-catalyseur et le métallocène,
- b) faire réagir le monomère de préformation au produit de réaction de l'étape a).

2. Système catalytique selon la revendication 1 dans lequel le co-catalyseur est un organomagnésien, de préférence un diorganomagnésien.

3. Système catalytique selon l'une quelconque des revendications 1 à 2 dans lequel le co-catalyseur est un composé organométallique comportant un groupe alkyle lié à l'atome de métal, préférentiellement un dialkylmagnésien ou un halogénure d'alkylmagnésien, plus préférentiellement le butyloctylmagnésium, le dibutylmagnésium, le butyléthylmagnésium ou le chlorure de butylmagnésium.

4. Système catalytique selon l'une quelconque des revendications 1 à 3 dans lequel le monomère de préformation est le 1,3-butadiène, l'isoprène, l'éthylène, le styrène ou leurs mélanges tels qu'un mélange de styrène et d'un monomère choisi parmi le 1,3-butadiène, l'isoprène et l'éthylène.

5. Système catalytique selon l'une quelconque des revendications 1 à 4 dans lequel G désigne un atome de chlore ou le groupe de formule (II)
(BH₄)_{(1+y)-}Ly-Nₓ (II)
dans laquelle
- L représente un métal alcalin choisi dans le groupe constitué par le lithium, le sodium et le potassium,
- N représente une molécule d'un éther, de préférence diéthyléther ou tétrahydrofuranne,
- x, nombre entier ou non, est égal ou supérieur à 0,
- y, nombre entier, est égal ou supérieur à 0.

6. Système catalytique selon l'une quelconque des revendications 1 à 5 dans lequel la terre rare est un lanthanide dont le numéro atomique varie de 57 à 71, de préférence le néodyme, Nd.

7. Système catalytique selon l'une quelconque des revendications 1 à 6 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone, de préférence un méthyle.

8. Système catalytique selon l'une quelconque des revendications 1 à 7 dans lequel le métallocène est le borohydrure de diméthylsilyl cyclopentadiényle fluorényle de néodyme de formule (IIIa) ou (IIIb):
[Me₂Si(Cp)(Flu)Nd(µ-BH₄)₂Li(THF)] (IIIa)
[Me₂Si(Cp)(Flu)Nd(µ-BH₄) (THF)] (IIIb)
Cp représentant le groupe C₅H₄, Flu représentant le groupe C₁₃H₈.

9. Système catalytique selon l'une quelconque des revendications 1 à 8 dans lequel le rapport molaire du monomère de préformation sur le métal du métallocène a une valeur allant de 5 à 1000, préférentiellement de 10 à 500.

10. Système catalytique selon l'une quelconque des revendications 1 à 9 dans lequel le rapport molaire de co-catalyseur sur le métal du métallocène a une valeur allant de 0,5 à 20, préférentiellement de 1 à 10.

11. Système catalytique selon l'une quelconque des revendications 1 à 10, lequel système catalytique est en solution dans un solvant hydrocarboné.

12. Système catalytique selon la revendication 11 dans lequel la concentration molaire en métal du métallocène dans le système catalytique a une valeur allant de 0,0001 à 0,05 mol/l, préférentiellement de 0,001 à 0,02 mol/l.

13. Procédé de préparation d'un système catalytique défini à l'une quelconque des revendications 1 à 12 qui comprend les étapes a) et b) suivantes :
- a) faire réagir dans un solvant hydrocarboné le co-catalyseur et le métallocène,
- b) faire réagir le monomère de préformation au produit de réaction de l'étape a).

14. Procédé selon la revendication 13 dans lequel l'étape a) a lieu à une température allant de 20 à 80°C, et l'étape b) est réalisée à une température allant de 40 à 120°C, préférentiellement de 40 à 90°C.

15. Procédé de préparation d'un polymère qui comprend la polymérisation d'un monomère M en présence d'un système catalytique défini à l'une quelconque des revendications 1 à 12, le monomère M étant choisi préférentiellement dans le groupe des monomères constitués par les diènes conjugués, l'éthylène, les α-monooléfines et leurs mélanges.

## Patentansprüche

1. Katalytisches System auf Basis von mindestens:
• einem Vorbildungsmonomer, das aus der Gruppe bestehend aus 1,3-Dienen, Ethylen, α-Monoolefinen und Mischungen davon ausgewählt ist,
• einem Metallocen der Formel (I),
• einer metallorganischen Verbindung als Cokatalysator,
{P(Cp) (Flu)LnG} (I)
- wobei Ln für ein Metallatom steht, bei dem es sich um ein Seltenerdmetall handelt,
- wobei G für eine Gruppe, die die Borhydrid-Einheit BH₄ umfasst, oder ein Halogenatom X, das aus Chlor, Fluor, Brom und Iod ausgewählt ist, steht,
- wobei Cp für eine Cyclopentadienylgruppe der Formel C₅H₄ steht,
- wobei Flu für eine Fluorenylgruppe der Formel C₁₃H₈ steht,
- wobei P für eine Gruppe steht, die die beiden Gruppen Cp und Flu verbrückt und ein Silicium- oder Kohlenstoffatom umfasst,
wobei das katalytische System durch ein Verfahren hergestellt wird, das die folgenden Schritte a) und b) umfasst:
- a) Umsetzen des Cokatalysators und des Metallocens in einem Kohlenwasserstofflösungsmittel,
- b) Umsetzen des Vorbildungsmonomers mit dem Umsetzungsprodukt aus Schritt a).

2. Katalytisches System nach Anspruch 1, wobei es sich bei dem Cokatalysator um eine Organomagnesiumverbindung, vorzugsweise eine Diorganomagnesiumverbindung, handelt.

3. Katalytisches System nach einem der Ansprüche 1 bis 2, wobei es sich bei dem Cokatalysator um eine metallorganische Verbindung mit einer an das Metallatom gebundenen Alkylgruppe, vorzugsweise eine Dialkylmagnesiumverbindung oder ein Alkylmagnesiumhalogenid, weiter bevorzugt Butyloctylmagnesium, Dibutylmagnesium, Butylethylmagnesium oder Butylmagnesiumchlorid, handelt.

4. Katalytisches System nach einem der Ansprüche 1 bis 3, wobei es sich bei dem Vorbildungsmonomer um 1,3-Butadien, Isopren, Ethylen, Styrol oder Mischungen davon wie eine Mischung von Styrol und einem aus 1,3-Butadien, Isopren und Ethylen ausgewählten Monomer, handelt.

5. Katalytisches System nach einem der Ansprüche 1 bis 4, wobei G für ein Chloratom oder die Gruppe der Formel (II) steht:
(BH₄)_{(1+y)}L_{y}-Nₓ (II),
wobei
- L für ein Alkalimetall steht, das aus der Gruppe bestehend aus Lithium, Natrium und Kalium ausgewählt ist,
- N für ein Molekül eines Ethers, vorzugsweise Diethylether oder Tetrahydrofuran, steht,
- x, das ganzzahlig oder nicht ganzzahlig ist, gleich oder größer als 0 ist,
- y, das ganzzahlig ist, gleich oder größer als 0 ist.

6. Katalytisches System nach einem der Ansprüche 1 bis 5, wobei es sich bei dem Seltenerdmetall um ein Lanthanid mit einer Ordnungszahl von 57 bis 71, vorzugsweise Neodym, Nd, handelt.

7. Katalytisches System nach einem der Ansprüche 1 bis 6, wobei die Brücke P der Formel ZR¹R² entspricht, wobei Z für ein Silicium- oder Kohlenstoffatom steht und R¹ und R², die gleich oder verschieden sind, jeweils für eine Alkylgruppe mit 1 bis 20 Kohlenstoffatomen, vorzugsweise ein Methyl, stehen.

8. Katalytisches System nach einem der Ansprüche 1 bis 7, wobei es sich bei dem Metallocen um (Dimethylsilyl)(cyclopentadienyl)(fluorenyl)neodym-borhydrid der Formel (IIIa) oder (IIIb) handelt:
[Me₂Si(Cp)(Flu)Nd(µ-BH₄)₂Li(THF)] (IIIa),
[Me₂Si(Cp)(Flu)Nd(µ-BH₄)(THF)] (IIIb),
wobei Cp für die C₅H₄-Gruppe steht und Flu für die C₁₃H₈-Gruppe steht.

9. Katalytisches System nach einem der Ansprüche 1 bis 8, wobei das Molverhältnis von Vorbildungsmonomer zu Metall des Metallocens einen Wert im Bereich von 5 bis 1000, vorzugsweise von 10 bis 500, aufweist.

10. Katalytisches System nach einem der Ansprüche 1 bis 9, wobei das Molverhältnis von Cokatalysator zu Metall des Metallocens einen Wert im Bereich von 0,5 bis 20, vorzugsweise von 1 bis 10, aufweist.

11. Katalytisches System nach einem der Ansprüche 1 bis 10, wobei das katalytische System in Lösung in einem Kohlenwasserstofflösungsmittel vorliegt.

12. Katalytisches System nach Anspruch 11, wobei die molare Konzentration an Metall des Metallocens in dem katalytischen System einen Wert im Bereich von 0,0001 bis 0,05 mol/l, vorzugsweise von 0,001 bis 0,02 mol/l, aufweist.

13. Verfahren zur Herstellung eines katalytischen Systems gemäß einem der Ansprüche 1 bis 12, das die folgenden Schritte a) und b) umfasst:
- a) Umsetzen des Cokatalysators und des Metallocens in einem Kohlenwasserstofflösungsmittel,
- b) Umsetzen des Vorbildungsmonomers mit dem Umsetzungsprodukt aus Schritt a).

14. Verfahren nach Anspruch 13, wobei der Schritt a) bei einer Temperatur im Bereich von 20 bis 80 °C erfolgt und der Schritt b) bei einer Temperatur im Bereich von 40 bis 120 °C, vorzugsweise von 40 bis 90 °C, durchgeführt wird.

15. Verfahren zur Herstellung eines Polymers, das die Polymerisation eines Monomers M in Gegenwart eines katalytischen Systems gemäß einem der Ansprüche 1 bis 12 umfasst, wobei das Monomer M vorzugsweise aus der Gruppe der Monomere bestehend aus konjugierten Dienen, Ethylen, α-Monoolefinen und Mischungen davon ausgewählt wird.

## Claims

1. Catalytic system based at least:
• on a preformation monomer selected from the group consisting of 1,3-dienes, ethylene, α-monoolefins and their mixtures,
• on a metallocene of formula (I),
• on an organometallic compound as cocatalyst,
{P(Cp)(Flu)LnG} (I)
- Ln denoting a metal atom which is a rare earth metal,
- G denoting a group comprising the borohydride BH₄ unit or denoting a halogen atom X selected from the group consisting of chlorine, fluorine, bromine and iodine,
- Cp denoting a cyclopentadienyl group of formula C₅H₄,
- Flu denoting a fluorenyl group of formula C₁₃H₈,
- P being a group bridging the two Cp and Flu groups and comprising a silicon or carbon atom
the catalytic system being prepared by a process comprising the following stages a) and b):
a) reacting, in a hydrocarbon solvent, the cocatalyst and the metallocene,
b) reacting the preformation monomer with the reaction product from stage a).

2. Catalytic system according to Claim 1, in which the cocatalyst is an organomagnesium compound, preferably a diorganomagnesium compound.

3. Catalytic system according to either one of Claims 1 and 2, in which the cocatalyst is an organometallic compound comprising an alkyl group bonded to the metal atom, preferably a dialkylmagnesium compound or an alkylmagnesium halide, more preferably butyloctylmagnesium, dibutylmagnesium, butylethylmagnesium or butylmagnesium chloride.

4. Catalytic system according to any one of Claims 1 to 3, in which the preformation monomer is 1,3-butadiene, isoprene, ethylene, styrene or their mixtures, such as a mixture of styrene and of a monomer chosen from 1,3-butadiene, isoprene and ethylene.

5. Catalytic system according to any one of Claims 1 to 4, in which G denotes a chlorine atom or the group of formula (II):
(BH₄)_{(1+y)}-L_{y}-Nₓ (II)
in which:
- L represents an alkali metal selected from the group consisting of lithium, sodium and potassium,
- N represents a molecule of an ether, preferably diethyl ether or tetrahydrofuran,
- x, which is or is not an integer, is equal to or greater than 0,
- y, which is an integer, is equal to or greater than 0.

6. Catalytic system according to any one of Claims 1 to 5, in which the rare earth metal is a lanthanide, the atomic number of which varies from 57 to 71, preferably neodymium, Nd.

7. Catalytic system according to any one of Claims 1 to 6, in which the bridge P corresponds to the formula ZR¹R², Z representing a silicon or carbon atom and R¹ and R², which are identical or different, each representing an alkyl group comprising from 1 to 20 carbon atoms, preferably a methyl.

8. Catalytic system according to any one of Claims 1 to 7, in which the metallocene is the (dimethylsilyl)(cyclopentadienyl)(fluorenyl)neodymium borohydride of formula (IIIa) or (IIIb):
[Me₂Si(Cp)(Flu)Nd(µ-BH₄)₂Li(THF)] (IIIa)
[Me₂Si(Cp)(Flu)Nd(µ-BH₄) (THF)] (IIIb)
Cp representing the C₅H₄ group and Flu representing the C₁₃H₈ group.

9. Catalytic system according to any one of Claims 1 to 8, in which the molar ratio of the preformation monomer to the metal of the metallocene has a value ranging from 5 to 1000, preferably from 10 to 500.

10. Catalytic system according to any one of Claims 1 to 9, in which the molar ratio of cocatalyst to the metal of the metallocene has a value ranging from 0.5 to 20, preferably from 1 to 10.

11. Catalytic system according to any one of Claims 1 to 10, which catalytic system is in solution in a hydrocarbon solvent.

12. Catalytic system according to Claim 11, in which the molar concentration of metal of the metallocene in the catalytic system has a value ranging from 0.0001 to 0.05 mol/l, preferably from 0.001 to 0.02 mol/l.

13. Process for the preparation of a catalytic system defined in any one of Claims 1 to 12, which comprises the following stages a) and b):
- a) reacting, in a hydrocarbon solvent, the cocatalyst and the metallocene,
- b) reacting the preformation monomer with the reaction product from stage a).

14. Process according to Claim 13, in which stage a) takes place at a temperature ranging from 20°C to 80°C and stage b) is carried out at a temperature ranging from 40°C to 120°C, preferably from 40°C to 90°C.

15. Process for the preparation of a polymer which comprises the polymerization of a monomer M in the presence of a catalytic system defined in any one of Claims 1 to 12, the monomer M being preferably selected from the group of the monomers consisting of conjugated dienes, ethylene, α-monoolefins and their mixtures.
